# EUROPEAN PATENT SPECIFICATION

(11) **EP 3 279 527 B1**
(45) Date of publication and mention of the grant of the patent: **18.05.2022**
(21) Application number: 17184202.4
(22) Date of filing: 01.08.2017
(51) Int. Cl.: F16J 15/34

(54) **MECHANICAL SEAL SYSTEM FOR A DRIVE SHAFT EXTENDING THROUGH AN OPENING IN A BULKHEAD**
MECHANISCHES DICHTUNGSSYSTEM FÜR EINE ANTRIEBSWELLE, DIE DURCH EINEN ÖFFNEN IN EINEM BULKHEAD ERWEITERT
SYSTÈME D'ÉTANCHÉITÉ MÉCANIQUE POUR UN ARBRE D'ENTRAÎNEMENT S'ÉTENDANT À TRAVERS UNE OUVERTURE DANS UNE PAROI

(30) Priority: 03.08.2016 IT 201600081995
(43) Date of publication of application: 07.02.2018
(73) Proprietor: Microtem Srl, 19126 La Spezia (SP) (IT)
(72) Inventor: Chiodetti, Mattia, 54010 Podenzana (IT)
(74) Representative: Bottino, Giovanni

(56) References cited:
- DE-U1- 29 804 075
- US-A- 5 716 054

## Description

Mechanical seal system for a drive shaft extending through an opening in a bulkhead.

The present invention relates to a mechanical seal system for a drive shaft extending through an opening in a bulkhead.

The invention is described below with reference to marine industry, but it can be obviously applied to any industrial field where it is necessary to guarantee a sealing effect to a bulkhead, and therefore it is not limited to watercraft bulkheads.

Drive shafts are currently supported by at least two bearings placed on opposite sides of the bulkhead and at a given distance from bulkhead. The sealing effect of the bulkhead is guaranteed by a radial lip sealing device made of rubber.

Such known systems however have clear drawbacks. Firstly, bearings are large and cumbersome, and therefore are very expensive and require large spaces for being installed, which cannot be always guaranteed by watercraft dimensions. Secondly, the rubber material the sealing device is made of is inflammable, and therefore it does not guarantee flame and fire resistance which on the contrary is more and more often required by regulations and shipbuilders. For example, US 5 716 054 A discloses a mechanical seal system according to the preamble of appended claim 1.

Therefore there is an unsatisfied need for a sealing system for a bulkhead that is compact, cheap, easy to be installed and flame resistant.

The present invention aims at overcoming drawbacks of known systems by a mechanical seal system as described in appended claim 1, which comprises an intermediate element configured for housing part of the drive shaft, which tubular element is provided with an intermediate flange having means fastening to the edge of said opening. The intermediate element has two opposite ends along the axis of rotation of the drive shaft, each end being provided with a respective mechanical seal device. Each mechanical seal device comprises a stationary part coupled to the tubular element and a rotary part rotatably coupled to the stationary part and integrally connected to the drive shaft. The stationary part and the rotary part are provided with a stationary annular sliding element and a rotary annular sliding element respectively, which annular sliding elements are each provided with a flat contact face, the two contact faces in each mechanical seal device being in coplanar relationship and in contact with each other.

In a preferred embodiment the intermediate element is a tubular element that supports said part of the drive shaft by means of a bearing.

This allows a single very compact assembly to be obtained that comprises a central bearing supporting the drive shaft and two mechanical seals facing opposite directions. The intermediate flange allows the whole system to be fastened to the opening in the bulkhead, while sealing such opening. Thus the drive shaft is not more supported by a plurality of very cumbersome bearings but it is supported by a single bearing integral with the bulkhead.

Means fastening the flange to the opening edge can be of any currently known type; preferably such means comprise bolts, such that the flange can be welded to the bulkhead and fastened by such bolts.

In a preferred embodiment the bearing is of the hydrodynamic type.

Hydrodynamic bearings, or hydrodynamic sleeves, are composed of a single cylindrical piece wherein pressurized fluid flows and have very low coefficients of friction. Among the advantages of hydrodynamic bearings there is a poor need for maintenance, resulting from the lack of moving parts. Seizure risk caused by dusts or processing residues is almost null, and the supporting function provided by the bearing is exerted by the layer of working fluid or lubricant internally covering the sleeve.

However it is possible to provide other types of prior art known bearings, such as for example sliding bearings, radial bearings with one or more rows of balls, straight or taper roller bearings, or the like.

According to one embodiment, between each seal device and the drive shaft there is provided at least partly an interstice in communication with the hydrodynamic bearing. There is provided a flushing circuit for a working fluid, which circuit comprises at least one duct, at least one pump and at least one tank.

Thus the working fluid that is part of the hydrodynamic bearing wets also the inner part of seal devices by the interstice provided between such devices and the drive shaft, and particularly it wets the annular elements of each seal device while guaranteeing lubrication of flat contact faces thereof. Therefore by means of single flushing circuit the operation of the hydrodynamic bearing and lubrication of seal devices are guaranteed.

According to an improvement, the circuit is put in communication with the interstice by means of at least one inlet and at least one outlet respectively provided in stationary parts of the two seal devices.

According to a further improvement, there is provided at least one hole for the passage of the fluid in the intermediate flange.

Therefore the working fluid flows under pressure inside the system from one to the other end, entering at a first seal device and coming out at the other seal device. The passage hole in the intermediate flange is passed through by the duct that constitutes the hydraulic circuit, or as an alternative it is provided with a through manifold to which ducts are connected on opposite sides of the flange.

Thus flushing circuit does not require further holes in bulkhead, but it is comprised in the same block of the system and therefore it can be at least mostly assembled during manufacturing phase before installation. However it is possible to make holes in the bulkhead at the holes in the intermediate flange, such to identify a single passage through the two elements for the working fluid.

In one embodiment there is provided a sleeve covering the drive shaft interposed between drive shaft and bearing and between drive shaft and seal devices.

This allows rotary parts of the seal devices not to be directly coupled to the drive shaft but it allows them to be coupled to said shared sleeve, extending for the whole length of the system along the axis of rotation. Such arrangement has the great advantage of allowing seal devices to be pre-loaded, and particularly the means pushing the annular sliding elements to be pre-loaded, which are necessary to keep the two contact faces of each seal device placed in contact with each other. Such operation can be performed before installation and therefore it allows the loading operation not to be performed asymmetrically firstly on a side and then on the other side, an operation that is made more difficult by the provision of the bulkhead. However it is possible to provide a variant embodiment where the sleeve is not present and where bearing directly supports the drive shaft and the drive shaft is directly coupled to rotary parts of the seal devices.

In a preferred embodiment there is provided a tightening collar for coupling the covering sleeve to the drive shaft.

According to one embodiment, the tubular element is provided at the opposite ends with end flanges having means fastening to stationary parts of the respective seal devices.

According to a further embodiment, each part that can be accessed from the outside is made of a not inflammable material.

This allows a completely flame resistant sealing system to be provided.

These and other characteristics and advantages of the present invention will be more clear from the following description of some not limitative embodiments shown in annexed drawings in which:
Fig.1 is a section view of the system;
Fig.2 is a side view;
Figs. 3 and 4 are two perspective views on opposite sides of the bulkhead;
Fig.5 is a section view of a further embodiment.

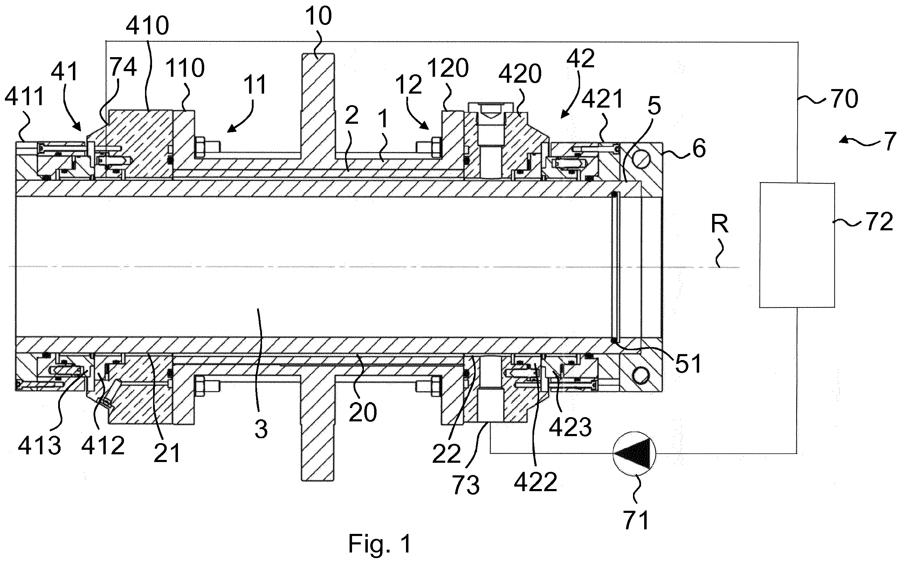

In section view of figure 1 all the elements of the mechanical seal system for the passage of the drive shaft, not shown in figures, through a bulkhead are visible.

The system comprises a tubular element 1 intended to house and support part of the drive shaft by means of a hydrodynamic bearing 2. Figure 1 shows the compartment 3 housing the drive shaft defined by the tubular element 1 and the axis of rotation R of the drive shaft.

The tubular element 1 is provided with an intermediate flange 10 intended to fasten the system to the edge of the bulkhead opening. Obviously the flange 10 has to exhibit a diameter greater than the bulkhead opening, such to overlap by a predetermined annular extension the bulkhead edge, to which it can be fastened by suitable fastening means such as welding and bolts.

The tubular element 1 has two opposite ends 11 and 12 along the axis of rotation R of the drive shaft and it is coupled at each end to a respective mechanical seal device 41 and 42.

Each mechanical seal device 41 and 42 comprises a stationary part 410 and 420 coupled to the tubular element 1 and a rotary part 411 and 421 rotatably coupled to the stationary part 410 and 420 and integrally connected to the drive shaft. The stationary part 410 and 420 and the rotary part 411 and 421 are provided with a stationary annular sliding element 412 and 422 and with a rotary annular sliding element 413 and 423 respectively, which sliding annular elements are each one provided with a flat contact face, the two flat contact faces being in coplanar relationship and in contact with each other.

Devices as those described in EP2762758 to the same applicant are preferably used as mechanical seal devices 41 and 42.

The tubular element 1 is coupled to the two seal devices 41 and 42 by the provision at opposite ends 11 and 12 of end flanges 110 and 120 having means fastening to the stationary parts 410 and 420 of the respective seal devices 41 and 42. Such fastening means preferably are screws and/or bolts.

The integral coupling of the stationary parts 410 and 420 to the drive shaft and the support of the drive shaft by the bearing 2 are carried out with the provision of a sleeve 5 covering the drive shaft, which sleeve 5 is interposed between drive shaft and bearing 2 and seal devices 41 and 42.

The sleeve 5 extends all along the length of the system along the axis of rotation R and it guarantees the sealing effect, that is it prevents liquid from leaking along the drive shaft, by a gasket ring or O-ring 51 interposed between drive shaft and sleeve 5, and housed in a suitable radial seat obtained in the inner wall of the sleeve 5.

The covering sleeve 5 is coupled to the drive shaft by means of a tightening collar 6, provided at one end of the covering sleeve 5. The collar is composed of two complementary semi-annular elements, which can be connected and disconnected from each other by removable fastening means in a condition clamping and opening respectively the annular element with respect to the drive shaft and sleeve 5. The radially innermost annular edge of the collar 6 is provided with a radial step, such to be divided in two regions with a different distance from the axis of rotation R: a first region has a diameter corresponding to the diameter of the drive shaft and a second region has a diameter corresponding to the diameter of the sleeve 5, such that the collar overlaps partially the drive shaft and partially the sleeve 5 and in the clamping condition it clamps both such elements coupling them with each other.

Rotary parts 411 and 421 are coupled to the sleeve 5, preferably by dowels.

The compartment 20 for the fluid of the hydrodynamic bearing is in hydraulic communication with two interstices 21 and 22 provided between part of each seal device 41 and 42 and the drive shaft. Interstices 21 and 22 and the compartment 20 therefore are a single substantially tubular shaped chamber about the sleeve 5. For each seal device 41 or 42 the interstice 21 or 22 extends for all the stationary part 410 or 420 and for the region of the annular sliding elements, ending at the rotary part 411 or 421, which rotary part is provided with a gasket ring or O-ring interposed between rotary part and sleeve 5.

There is provided a flushing circuit 7 for a working fluid, outlined in figure 1. The circuit 7 comprises a duct 70, a pump 71 and a tank 72.

By the provision of a single chamber composed of the compartment 20 and interstices 21 and 22 the working fluid has a twofold function for supporting the sleeve 5 in the hydrodynamic bearing 2 and for lubricating flat contact faces of annular elements 412, 413, 422 and 423 of each seal device 41 and 42.

The circuit 7 is put in communication with the chamber composed of the compartment 20 and interstices 21 and 22 by an inlet 73 and outlet 74 provided in stationary parts of the two seal devices respectively: the inlet 73 is provided in the stationary part 420 of the seal device 42 and the outlet 74 is provided in the stationary part 410 of the seal device 41.

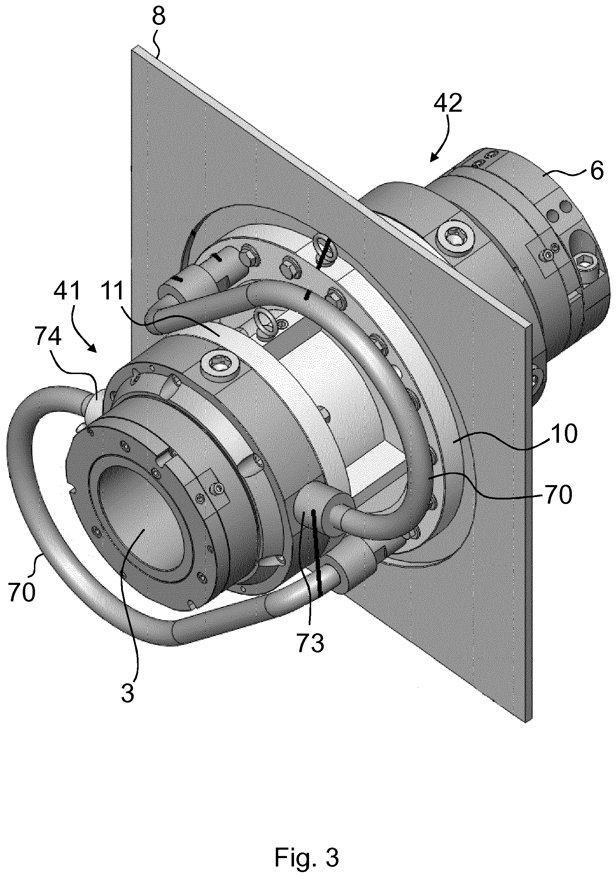

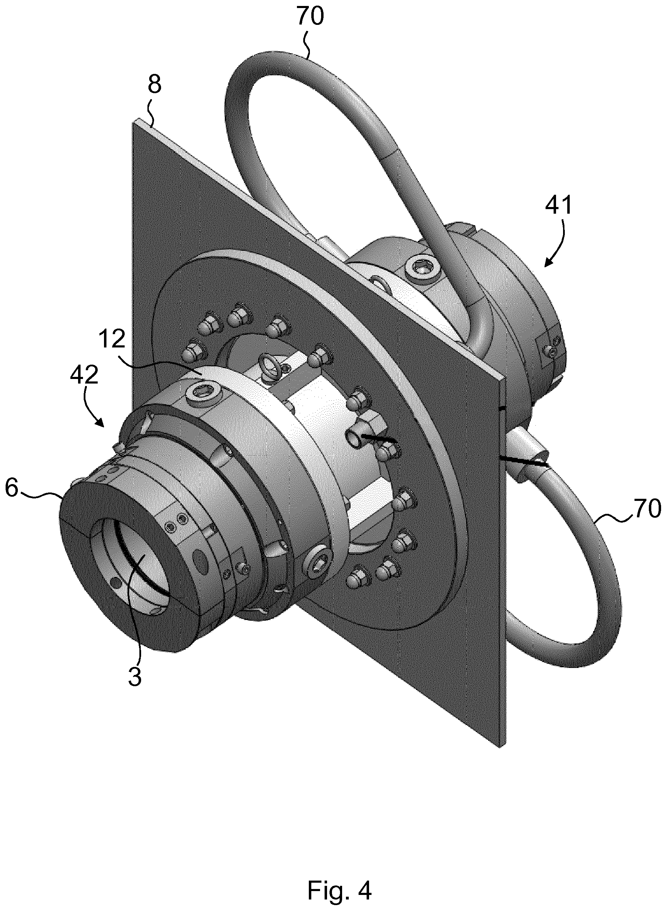

In an alternative embodiment, shown for example in figures 3 and 4, the inlet 73 and the outlet 74 are provided in the stationary part of the same seal device.

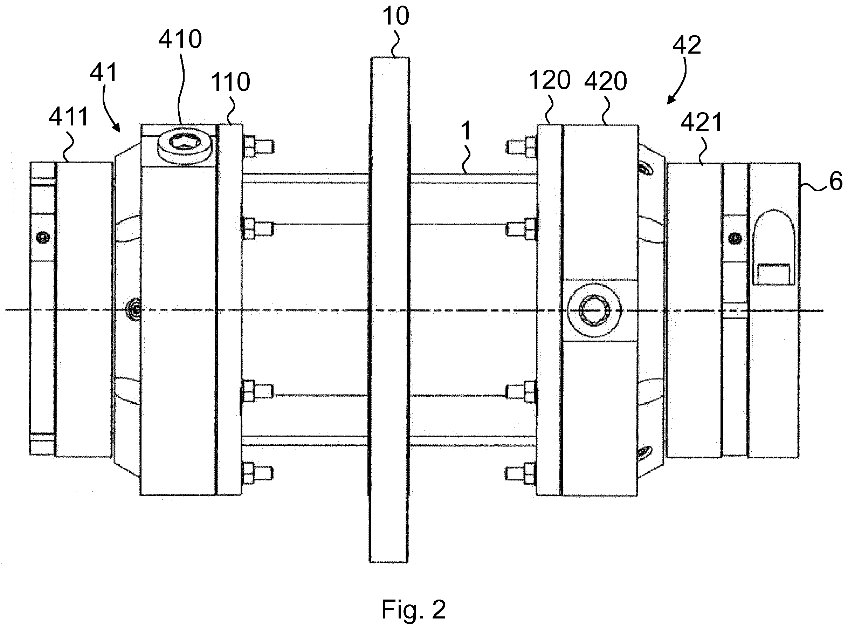

Figure 2 shows the system in a side view from the outside. It is possible to see the tubular element 1, with the intermediate flange 10 and end flanges 110 and 120 to which seal devices 41 and 42 are coupled. Near the seal device 42 the clamping collar 6 is placed.

Each part accessible from the outside is made of not inflammable material. In a preferred embodiment such material is metallic, particularly bronze. All the elements made of inflammable material, such as for example gasket rings seen in figure 1 are inside the system and cannot be reached by flames. The annular sliding elements 412, 422, 413 and 423 are preferably made of graphite and/or silicon carbide. However such annular sliding elements cannot be reached by flames from the outside, since the slot present in seal devices between the stationary part and the rotary part has extremely small dimensions.

In figures 3 and 4 the system is shown in the condition coupled to bulkhead 8. Such as shown, the intermediate flange 10 is applied on the edge of the hole in the bulkhead, and it is fastened by bolts. As said above, and as it is clear in the figure, the intermediate flange 10 has to exhibit a diameter greater than the opening in the bulkhead 8; end flanges 110 and/or 120 and the seal devices 41 and/or 42, on the contrary, have to exhibit a diameter smaller than the opening such to be inserted therein.

Two ducts 70 are visible that are part of the flushing circuit 7, and connected to an inlet 73 and outlet 74 respectively, provided in the seal device 41.

There are further provided two passage holes for the working fluid in the intermediate flange 10 and in corresponding points in the bulkhead, and there are provided manifolds for the ducts 70 and for further ducts, not shown in the figure, connectable at the other part of the bulkhead to the pump 71 and to the tank 72, they also being not shown in the figure.

In this case, unlike example of figure 1, there is no duct that comes out from a first mechanical seal device, passes in the bulkhead, is led to the tank 72 and then to the pump 71 and then entering in the further mechanical seal device, but the duct comes out and enters in the same mechanical seal device 41 and passes through the bulkhead to be joined at the other side to the tank 72 and the pump 71. However the fluid is supplied to both mechanical seal devices 41 and 42 and to the hydrodynamic bearing 2, all the three elements being connected hydraulically with one another. The tank 72 and the pump 71 can be on the same side of the bulkhead as the mechanical seal device provided with inlet and outlet for the duct; in this case the duct does not have bulkhead passages.

As an alternative it is possible to provide in both the mechanical seal devices 41 and 42 an inlet and an outlet for the duct 70.

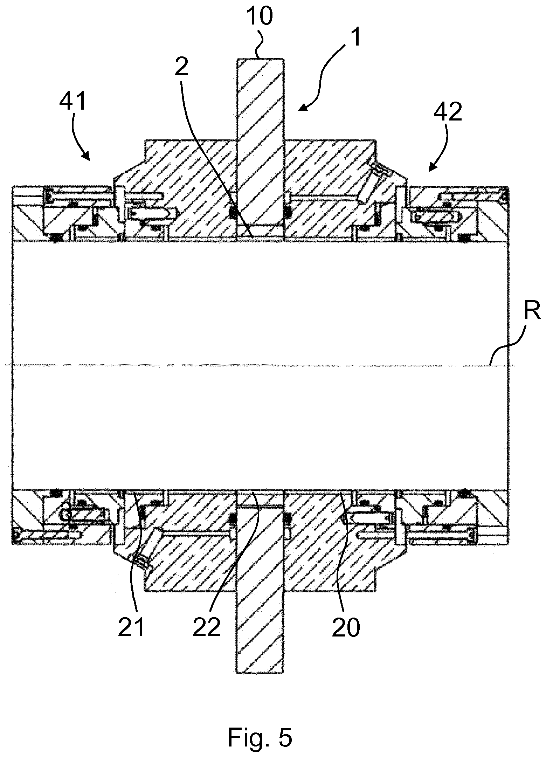

The tubular element 1 can extend in the direction of the axis of rotation R to any extent, as established in design phase. In a limit case such as shown in figure 5, the tubular element does not extend in direction of the axis of rotation R, and the intermediate element is therefore composed of only the flange 10 to which the mechanical seal devices 41 and 42 are fastened facing opposite directions.

In this case it is possible both to provide the hydrodynamic bearing 2, in hydraulic communication with mechanical seal devices 41 and 42, and to omit the hydrodynamic bearing.

## Claims

1. Mechanical seal system suitable for a drive shaft extending through an opening in a bulkhead (8), the seal system comprising an intermediate element (1) suitable for housing part of the drive shaft, which intermediate element (1) is provided with an intermediate flange (10) having means suitable for fastening to the edge of said opening, the intermediate element (1) having two opposite ends (11, 12) along the axis of rotation (R) of the drive shaft, each end (11, 12) being provided with a respective mechanical seal device (41, 42) comprising a stationary part (410, 420) coupled to the intermediate element (1) and a rotary part (411, 421) rotatably coupled to the stationary part (410, 420) and integrally connectable to the drive shaft, the stationary part (410, 420) and the rotary part (411, 421) being provided with a stationary annular sliding element (412, 422) and a rotary annular sliding element (413, 423) respectively, which annular sliding elements (412, 413, 422, 423) are each provided with a flat contact face, the two contact faces in each seal device (41, 42) being in coplanar relationship and in contact with each other,
**characterized in that**
each part accessible from outside the seal system is made of not inflammable material,
and the annular sliding elements cannot be reached by flames from outside the seal system, since a slot present in the mechanical seal devices (41, 42) between the stationary part (410, 420) and the rotary part (411, 421) has extremely small dimensions.

2. System according to claim 1, wherein the intermediate element is a tubular element (1) having a bearing (2) suitable to support the said part of the drive shaft.

3. System according to claim 2, wherein the bearing (2) is of hydrodynamic type.

4. System according to claim 3, wherein between each seal device (41, 42) and a space suitable to contain the drive shaft there is provided at least partly an interstice (21, 22) in communication with the hydrodynamic bearing (2), there being provided a flushing circuit (7) for a working fluid, which circuit (7) comprises at least one duct (70), at least one pump (71) and at least one tank (72).

5. System according to claim 4, wherein the circuit (7) is in communication with the interstice (21, 22) by means of at least one inlet (73) and at least one outlet (74) respectively provided in the stationary parts (410, 420) of the two seal devices (41, 42) or provided in the stationary part (410, 420) of the same seal device (41, 42) .

6. System according to claim 5, wherein there is provided at least one passage hole for the fluid in the intermediate flange (10).

7. System according to one or more of the preceding claims, wherein there is provided a covering sleeve (5) for the drive shaft, which sleeve (5) is interposable between the drive shaft and the bearing (2) and between the drive shaft and the seal devices (41, 42).

8. System according to claim 7, wherein a clamping collar (6) is provided for coupling the sleeve (5) to the drive shaft.

9. System according to one or more of the preceding claims, wherein the tubular element (1) is provided at the opposite ends (11, 12) with end flanges (110, 120) having means fastening to the stationary parts (410, 420) of the respective seal devices (41, 42).

## Patentansprüche

1. Mechanisches Dichtungssystem, das für eine Antriebswelle geeignet ist, die sich durch eine Öffnung in einem Bugschott (8) erstreckt, wobei das Dichtungssystem ein Zwischenelement (1) umfasst, das geeignet ist, einen Teil der Antriebswelle aufzunehmen, wobei das Zwischenelement (1) mit einem Zwischenflansch (10) versehen ist, der Mittel aufweist, die geeignet sind, am Rand der Öffnung befestigt zu werden, wobei das Zwischenelement (1) zwei gegenüberliegende Enden (11, 12) entlang der Drehachse (R) der Antriebswelle aufweist, wobei jedes Ende (11, 12) mit einer jeweiligen mechanischen Dichtungsvorrichtung (41, 42) versehen ist, die einen stationären Teil (410, 420), der mit dem Zwischenelement (1) gekoppelt ist, und einem rotierenden Teil (411, 421), der drehbar mit dem stationären Teil (410, 420) gekoppelt ist und integral mit der Antriebswelle verbunden werden kann, wobei der stationäre Teil (410, 420) und der rotierende Teil (411, 421) mit einem stationären ringförmigen Schiebeelement (412, 422) bzw. einem rotierenden ringförmigen Schieber (413, 423) versehen sind, wobei die ringförmigen Schieber (412, 413, 422, 423) jeweils mit einer flachen Kontaktfläche versehen sind, wobei die beiden Kontaktflächen in jeder Dichtungsvorrichtung (41, 42) in einer koplanaren Beziehung zueinander stehen und in Kontakt miteinander sind,
**dadurch gekennzeichnet, dass**
jedes von außerhalb des Dichtungssystems zugängliche Teil aus nicht brennbarem Material besteht,
und die ringförmigen Schieber können nicht von Flammen von außerhalb des Dichtungssystems erreicht werden, da ein in den mechanischen Dichtungsvorrichtungen (41, 42) vorhandener Schlitz zwischen dem stationären Teil (410, 420) und dem rotierenden Teil (411, 421) äußerst geringe Abmessungen aufweist.

2. System nach Anspruch 1, bei dem das Zwischenelement ein rohrförmiges Element (1) mit einem Lager (2) ist, das geeignet ist, den besagten Teil der Antriebswelle zu tragen.

3. System nach Anspruch 2, wobei das Lager (2) vom hydrodynamischen Typ ist.

4. System nach Anspruch 3, bei dem zwischen jeder Dichtungsvorrichtung (41, 42) und einem Raum, der zur Aufnahme der Antriebswelle geeignet ist, zumindest teilweise ein Zwischenraum (21, 22) vorgesehen ist, der mit dem hydrodynamischen Lager (2) in Verbindung steht, wobei ein Spülkreislauf (7) für ein Arbeitsfluid vorgesehen ist, wobei der Kreislauf (7) mindestens eine Leitung (70), mindestens eine Pumpe (71) und mindestens einen Behälter (72) umfasst.

5. System nach Anspruch 4, wobei der Kreislauf (7) über mindestens einen Einlass (73) und mindestens einen Auslass (74), die jeweils in den stationären Teilen (410, 420) der beiden Dichtungsvorrichtungen (41, 42) vorgesehen sind oder im stationären Teil (410, 420) derselben Dichtungsvorrichtung (41, 42) vorgesehen sind, mit dem Zwischenraum (21, 22) in Verbindung steht.

6. System nach Anspruch 5, wobei in dem Zwischenflansch (10) mindestens ein Durchgangsloch für das Fluid vorgesehen ist.

7. System nach einem oder mehreren der vorhergehenden Ansprüche, wobei für die Antriebswelle eine Abdeckhülse (5) vorgesehen ist, die zwischen der Antriebswelle und dem Lager (2) sowie zwischen der Antriebswelle und den Dichtungsvorrichtungen (41, 42) zwischengeschaltet ist.

8. System nach Anspruch 7, wobei eine Klemmschelle (6) vorgesehen ist, um die Hülse (5) mit der Antriebswelle zu verbinden.

9. System nach einem oder mehreren der vorhergehenden Ansprüche, wobei das rohrförmige Element (1) an den gegenüberliegenden Enden (11, 12) mit Endflanschen (110, 120) versehen ist, die Mittel zur Befestigung an den stationären Teilen (410, 420) der jeweiligen Dichtungsvorrichtungen (41, 42) aufweisen.

## Revendications

1. Système d'étanchéité mécanique approprié pour un arbre d'entraînement s'étendant à travers une ouverture dans une cloison (8), le système d'étanchéité comprenant un élément intermédiaire (1) apte à loger une partie de l'arbre d'entraînement, ledit élément intermédiaire (1) étant muni d'une bride intermédiaire (10) ayant des moyens aptes à se fixer au bord de ladite ouverture, l'élément intermédiaire (1) ayant deux extrémités opposées (11, 12) le long de l'axe de rotation (R) de l'arbre d'entraînement, chaque extrémité (11, 12) étant munie d'un dispositif d'étanchéité mécanique respectif (41, 42) comprenant une partie fixe (410, 420) couplée à l'élément intermédiaire (1) et une partie rotative (411, 421) couplée de manière rotative à la partie fixe (410, 420) et pouvant être reliée de manière solidaire à l'arbre d'entraînement, la partie fixe (410, 420) et la partie rotative (411, 421) étant pourvues, respectivement, d'un élément coulissant annulaire fixe (412, 422) et d'un élément coulissant annulaire rotatif (413, 423), lesdits éléments coulissants annulaires (412, 413, 422, 423) étant chacun pourvus d'une face de contact plate, les deux faces de contact dans chaque dispositif d'étanchéité (41, 42) étant coplanaires et en contact l'un avec l'autre,
**caractérisé en ce que**
chaque partie accessible de l'extérieur du système d'étanchéité est constituée d'un matériau non inflammable,
et les éléments coulissants annulaires ne peuvent pas être atteints par des flammes de
l'extérieur du système d'étanchéité, étant donné qu'une fente présente dans les dispositifs d'étanchéité mécaniques (41, 42) entre la partie fixe (410, 420) et la partie rotative (411, 421) a des dimensions extrêmement petites.

2. Système selon la revendication 1, dans lequel l'élément intermédiaire est un élément tubulaire (1) ayant un palier (2) apte à supporter ladite partie de l'arbre d'entraînement.

3. Système selon la revendication 2, dans lequel le palier (2) est de type hydrodynamique.

4. Système selon la revendication 3, dans lequel, entre chaque dispositif d'étanchéité (41, 42) et un espace apte à contenir l'arbre d'entraînement, un interstice (21, 22) est prévu au moins partiellement en communication avec le palier hydrodynamique (2), un circuit de rinçage (7) pour un fluide de travail étant prévu, ledit circuit (7) comprenant au moins un conduit (70), au moins une pompe (71) et au moins un réservoir (72).

5. Système selon la revendication 4, dans lequel le circuit (7) est en communication avec l'interstice (21, 22) au moyen d'au moins une entrée (73) et d'au moins une sortie (74) prévues respectivement dans les parties fixes (410, 420) des deux dispositifs d'étanchéité (41, 42) ou prévues dans la partie fixe (410, 420) du même dispositif d'étanchéité (41, 42).

6. Système selon la revendication 5, dans lequel au moins un trou de passage est prévu pour le fluide dans la bride intermédiaire (10).

7. Système selon une ou plusieurs des revendications précédentes, dans lequel un manchon de recouvrement (5) est prévu pour l'arbre d'entraînement, ledit manchon (5) pouvant être interposé entre l'arbre d'entraînement et le palier (2) et entre l'arbre d'entraînement et les dispositifs d'étanchéité (41, 42).

8. Système selon la revendication 7, dans lequel un collier de serrage (6) est prévu pour coupler le manchon (5) à l'arbre d'entraînement.

9. Système selon une ou plusieurs des revendications précédentes, dans lequel l'élément tubulaire (1) est pourvu aux extrémités opposées (11, 12) de brides d'extrémité (110, 120) ayant des moyens se fixant aux parties fixes (410, 420) des dispositifs d'étanchéité respectifs (41, 42).
